# EUROPÄISCHE PATENTSCHRIFT

(11) **EP 2 885 561 B1**
(45) Veröffentlichungstag und Bekanntmachung des Hinweises auf die Patenterteilung: **12.10.2016**
(21) Anmeldenummer: 13762738.6
(22) Anmeldetag: 05.08.2013
(51) Int. Cl.: F16H 55/36

(54) **RIEMENSCHEIBENANORDNUNG FÜR EINEN RIEMENTRIEB ZUM ANTRIEB VON NEBENAGGREGATEN EINES KRAFTFAHRZEUGS UND VERFAHREN ZUM ANTRIEB EINES ÜBER EINE RIEMENSCHEIBENANORDNUNG ANGEBUNDENEN NEBENAGGREGATS EINES KRAFTFAHRZEUGS**
BELT PULLEY ARRANGEMENT FOR A BELT DRIVE FOR DRIVING AUXILIARY UNITS OF A MOTOR VEHICLE AND METHOD FOR DRIVING AN AUXILIARY UNIT OF A MOTOR VEHICLE CONNECTED VIA A BELT PULLEY ARRANGEMENT
DISPOSITIF À COURROIE ET POULIE POUR UNE TRANSMISSION À COURROIE SERVANT À ENTRAÎNER DES GROUPES AUXILIAIRES D'UN VÉHICULE AUTOMOBILE ET PROCÉDÉ POUR ENTRAÎNER UN GROUPE AUXILIAIRE D'UN VÉHICULE AUTOMOBILE ACCOUPLÉ PAR UN DISPOSITIF À COURROIE ET POULIE

(30) Priorität: 14.08.2012 DE 102012214486; 10.09.2012 DE 102012215949
(43) Veröffentlichungstag der Anmeldung: 24.06.2015
(73) Patentinhaber: Schaeffler Technologies AG & Co. KG, 91074 Herzogenaurach (DE)
(72) Erfinder: DIPPOLD, Oliver, 90427 Nürnberg (DE); BARANOV, Vladimir, 91052 Erlangen (DE); WAGNER, Ralf, 90587 Obermichelbach (DE); HARTMANN, Bernd, 91085 Weisendorf (DE); MÁN, Lászlo, 77833 Ottersweier-Unzhurst (DE)
(86) Internationale Anmeldenummer: PCT/DE2013/200096
(87) Internationale Veröffentlichungsnummer: WO 2014/026682

(56) Entgegenhaltungen:
- EP-A2- 1 120 182
- EP-A2- 1 253 319
- WO-A1-2005/119023

## Beschreibung

### Gebiet der Erfindung

Die Erfindung betrifft eine Riemenscheibenanordnung für einen Riementrieb zum Antrieb von Nebenaggregaten eines Kraftfahrzeugs und ein Verfahren zum Antrieb eines über eine Riemenscheibenanordnung angebundenen Nebenaggregats eines Kraftfahrzeugs, mit deren Hilfe ein Nebenaggregat eines Kraftfahrzeugs, beispielsweise eine Kühlwasserpumpe, über ein Zugmittel mit Hilfe eines von einem Kraftfahrzeugmotor bereitgestelltem Drehmoments angetrieben werden kann.

Aus DE 101 48 961 A1 ist ein Riementrieb mit einer Eingangsriemenscheibe zum Antrieb von Nebenaggregaten bekannt, der über ein Planetengetriebe mit einer Kurbelwelle der Brennkraftmaschine verbunden ist, wobei über das von der Riemenscheibe angetriebene Zugmittel über Ausgangsriemenscheiben verschiedene Nebenaggregate angetrieben werden können. Zusätzlich ist über eine weitere Ausgangsriemenscheibe auch eine elektrische Maschine an das Zugmittel angebunden, um im Generatorbetrieb aus der mechanischen Energie des Zugmittels elektrische Energie zu erzeugen oder im Motorbetrieb einen zusätzlichen Drehmomenteintrag in das Zugmittel leisten zu können.

Die gattungsgemäße WO 20051119023 A1 offenbart eine Riemenscheibenanordnung für einen Riementrieb zum Antrieb von Nebenaggregaten mit
- einer Riemenscheibe zum Einleiten eines über ein Zugmittel bereitstellbaren Drehmoments,
- einer Abtriebswelle zum Antrieb eines Nebenaggregats und
- einer elektrischen Maschine zur Drehmomentübertragung zwischen der Riemenscheibe und der Abtriebswelle, wobei die elektrische Maschine einen mit der Riemenscheibe verbundenen Rotor und einen mit der Abtriebswelle verbundenen Stator aufweist.

Es besteht ein ständiges Bedürfnis den Bauraum für Kraftfahrzeugkomponenten zu reduzieren.

### Gegenstand der Erfindung

Es ist die Aufgabe der Erfindung Maßnahmen aufzuzeigen, die eine Reduzierung des Bauraums für Kraftfahrzeugkomponenten, insbesondere des Bauraums von über einen Riementrieb antreibbaren Nebenaggregaten eines Kraftfahrzeugs, ermöglicht.

Die Lösung der Aufgabe erfolgt erfindungsgemäß durch eine Riemenscheibenanordnung mit den Merkmalen des Anspruchs 1 sowie ein Verfahren zum Antrieb eines über eine Riemenscheibenanordnung angebundenen Nebenaggregats eines Kraftfahrzeugs mit den Merkmalen des Anspruchs 9. Bevorzugte Ausgestaltungen der Erfindung sind in den Unteransprüchen angegeben.

Erfindungsgemäß ist eine Riemenscheibenanordnung für einen Riementrieb zum Antrieb von Nebenaggregaten eines Kraftfahrzeugs vorgesehen mit einer Riemenscheibe zum Einleiten eines über ein Zugmittel bereitstellbaren Drehmoments, einer Abtriebswelle zum Antrieb eines Nebenaggregats, insbesondere Kühlwasserpumpe, und einer elektrischen Maschine zur Drehmomentübertragung zwischen der Riemenscheibe und der Abtriebswelle, wobei die elektrische Maschine einen mit der Riemenscheibe verbundenen Rotor und einen mit der Abtriebswelle verbundenen Stator aufweist.

Mit Hilfe der durch den Rotor und dem Stator ausgebildeten elektrischen Maschine kann die Abtriebswelle elektromagnetisch mit der Riemenscheibe gekoppelt werden, so dass durch Beeinflussung eines sich zwischen dem Rotor und dem Stator ausbildenden elektrischen und/oder magnetischen Feldes der Leistungsfluss zwischen der Riemenscheibe und der Abtriebswelle verändert werden kann. Dadurch ist es insbesondere möglich die Abtriebswelle auch bei einer hohen Drehzahl der Riemenscheibe unterhalb einer zulässigen maximalen Drehzahl und/oder auch bei einer niedrigen Drehzahl der Riemenscheibe oberhalb einer vorgesehenen minimalen Drehzahl betreiben zu können. Durch den von der elektrischen Maschine beeinflussbaren Leistungsfluss zwischen der Riemenscheibe und der Abtriebswelle ist es nicht erforderlich das über die Abtriebswelle angebundene Nebenaggregat für den ungünstigsten Betriebspunkt auszulegen, so dass das Nebenaggregat kleiner dimensioniert sein kann und eine Reduzierung des Bauraums für Kraftfahrzeugkomponenten, insbesondere des Bauraums von über den Riementrieb antreibbaren Nebenaggregaten eines Kraftfahrzeugs, ermöglicht ist.

Die elektrische Maschine wird insbesondere ausschließlich als elektromechanischer Wandler betrieben. Die elektrische Maschine ist beispielsweise als Gleichstromantrieb oder Drehstromantrieb ausgestaltet. Die elektrische Maschine kann insbesondere permanent erregt oder fremd erregt sein. Insbesondere ist es möglich die elektrische Maschine als Synchronmaschine oder Asynchronmaschine auszugestalten. Das sich zwischen dem Rotor und dem Stator ausbildende elektrische und/oder magnetische Feld kann beispielsweise dadurch verändert werden, dass der Rotor relativ zu dem Stator axial verschoben werden kann, so dass sich die axiale Erstreckung ändern kann, über welcher die für die Übertragung des Leistungsflusses relevanten Bauteile, insbesondere Permanentmagnete und/oder Wicklungen, des Rotors und des Stators in radialer Richtung hintereinander überlappend angeordnet sind. Insbesondere ist es möglich den Rotor soweit relativ zum Stator axial zu verschieben, dass eine Leistungsübertragung zwischen dem Rotor und dem Stator unterbrochen werden kann, beispielsweise um das über die Abtriebswelle angeschlossene Nebenaggregat von dem Riementrieb abzukoppeln.

Der Rotor der elektrischen Maschine kann mit der Drehzahl der Riemenscheibe rotieren. Der Antrieb des Rotors erfolgt insbesondere über die Riemenscheibe durch ein an der Riemenscheibe angreifendes Zugmittel. Das Zugmittel ist insbesondere als Riemen, Flachriemen, Keilriemen, Zahnriemen, Poly-V-Riemen, Seil, Kette oder ähnliches ausgestaltet. Mit Hilfe einer oder mehrerer Umlenkrollen kann der Umschlingungswinkel des Zugmittels an der Riemenscheibe erhöht werden und/oder eine Vorspannung des Zugmittels eingestellt werden. Der Stator der elektrischen Maschine kann mit der Drehzahl der Abtriebswelle rotieren. Das heißt im normalen Betrieb kann sowohl der Rotor als auch der Stator rotieren, wobei durch eine Beeinflussung des elektromagnetischen Feldes zwischen dem Rotor und dem Stator, insbesondere durch ein individuell einstellbares Bestromen von Wicklungen des Stators und/oder des Rotors, eine Drehzahldifferenz zwischen dem Rotor und dem Stator erhöht oder verringert werden kann, insbesondere um eine gewünschte Nenndrehzahl an der Abtriebswelle regeln zu können. Die gewünschte Nenndrehzahl der Abtriebswelle kann insbesondere variabel sein und sich im laufenden Betrieb ändern. Beispielsweise kann ein gewünschter Volumenstrom eines als Kühlwasserpumpe ausgestalteten Nebenaggregats in Abhängigkeit von der Temperatur einer von dieser Kühlwasserpumpe zu kühlenden Kraftfahrzeugkomponente geregelt werden, so dass sich die Nenndrehzahl der mit dieser Kühlwasserpumpe verbundenen Abtriebswelle zur Einstellung des gewünschten Volumenstroms ändern kann. Falls das Nebenaggregat zwischenzeitlich nicht betrieben werden soll, kann beispielsweise vorgesehen sein die Abtriebswelle mechanisch oder elektrisch zu sperren und einen Leistungseintrag in das Nebenaggregat zu unterbinden. Vorzugsweise kann der Rotor über einen, insbesondere schaltbaren, Freilauf mit der Riemenscheibe und/oder der Stator über einen, insbesondere schaltbaren, Freilauf mit der Abtriebswelle verbunden sein. Dies ermöglicht es für bestimmte Betriebssituationen einen Leistungsfluss von der Riemenscheibe zur Abtriebswelle zu unterbrechen, ohne über die elektrische Maschine unnötige Blindleistung zu erzeugen oder das Nebenaggregat, insbesondere in einer Start-Stopp-Situation, einer Change-of-mind Situation oder bei einem Start des Kraftfahrzeugmotors zum Antrieb des Kraftfahrzeugs zumindest kurzzeitig rein elektrisch zu betreiben. Das Nebenaggregat ist beispielsweise eine Kühlwasserpumpe, Ölpumpe, Klimakompressor einer Klimaanlage, Kraftstoffpumpe, Lichtmaschine, Schmierstoffpumpe, mechanischer Lader/Kompressor für Ladeluftverdichtung bei aufladbaren Kraftvahrzeugmotoren.

Insbesondere ist die elektrische Maschine mit einer elektrischen Energiequelle zum Beschleunigen der Abtriebswelle und/oder mit einer elektrischen Energiesenke zum Abbremsen der Abtriebswelle verbunden. Die Energiequelle und/oder die Energiesenke kann mit den Wicklungen des Rotors und/oder des Stators der elektrischen Maschine verbunden sein. Die Energiequelle und die Energiesenke können insbesondere das selbe Bauteil sein, vorzugsweise eine aufladbare Batterie (Akkumulator), wie beispielsweise eine Kraftfahrzeugbatterie. Vorzugsweise kann zuvor in der Energiesenke gespeicherte elektrische Energie als Energiequelle für die Beschleunigung der Abtriebswelle genutzt werden. Durch die Zufuhr elektrischer Energie der elektrischen Maschine aus der Energiequelle und/oder der Abfuhr elektrischer Energie aus der elektrischen Maschine zur Energiesenke kann der Betrag und/oder das Vorzeichen einer Drehzahldifferenz zwischen der Drehzahl der Riemenscheibe und der Drehzahl der Abtriebswelle gezielt verändert werden. Bei einer Zufuhr elektrischer Energie kann die Abtriebswelle zusätzlich zu der von der Riemenscheibe eingeleiteten Drehzahl beschleunigt werden, wodurch die Abtriebswelle die Riemenscheibe überholt ("Überholbetrieb"). Bei einer Abfuhr elektrischer Energie kann die Abtriebswelle im Vergleich zu der von der Riemenscheibe eingeleiteten Drehzahl abgebremst werden, wodurch die Abtriebswelle langsamer als die Riemenscheibe dreht ("Bremsbetrieb"). Im Bremsbetrieb kann vorzugsweise ein elektrischer Verbraucher und/oder ein elektrischer Speicher an die elektrische Maschine angeschlossen werden. Insbesondere kann der elektrische Widerstand des angeschlossenen Verbrauchers unendlich groß sein, wodurch im Wesentlichen kein Schleppmoment mehr entsteht. Insbesondere kann die Nenndrehzahl der Abtriebswelle von der Drehzahl der Riemenscheibe entkoppelt werden. Insbesondere ist es möglich durch die Verbindung der elektrischen Maschine mit der Energiesenke elektrische Energie für ein Bordnetz des Kraftfahrzeugs oder zur Speicherung elektrischer Energie zu erzeugen ("Generatorbetrieb") oder bei einem Bremsvorgang des Kraftfahrzeugs einen Teil der Bremsleistung als elektrische Energie zurückzugewinnen ("Rekuperation").

Vorzugsweise ist ein Schaltelement zur Herstellung einer im Wesentlichen drehfesten Koppelung der Riemenscheibe mit der Abtriebswelle im Falle eines wegfallenden Stromflusses bei der elektrischen Maschine vorgesehen. Dadurch ergibt sich eine Fail-Safe-Funktionalität für das Nebenaggregat, das beispielsweise bei einem Ausfall der Bordnetzspannung zumindest einen ungeregelten Betrieb des Nebenaggregats in Abhängigkeit von der Drehzahl der Riemenscheibe ermöglicht. In diesem "Fail-Safe"-Betriebszustand kann eine rein mechanische Koppelung der Riemenscheibe mit der Abtriebswelle vorliegen. Beispielsweise ist das Schaltelement als stromdurchflossener Elektromagnet ausgestaltet, der im stromdurchflossenen Zustand eine Feder zur Herbeiführung einer mechanischen Koppelung der Riemenscheibe mit der Abtriebswelle vorspannt. Bei einem Ausfall der Stromversorgung kann der Elektromagnet die Feder nicht mehr vorspannen, so dass sich die Feder entspannt und insbesondere eine reibschlüssige und/oder formschlüssige Koppelung der Riemenscheibe mit der Abtriebswelle herbeiführt.

Besonders bevorzugt weist die elektrische Maschine Wicklungen auf, wobei die Wicklung im Falle eines wegfallenden Stromflusses bei der elektrischen Maschine kurzschließbar ist. Das Schaltelement zur Herstellung einer im Wesentlichen drehfesten Koppelung der Riemenscheibe mit der Abtriebswelle im Falle eines wegfallenden Stromflusses bei der elektrischen Maschine kann dadurch beispielsweise als bauraumsparende elektrische Schaltung ausgestaltet sein, welche die Wicklungen kurzschließt, wenn beispielsweise eine Stromversorgung über ein Bordnetz des Kraftfahrzeugs ausfällt. In die Wicklungen kann insbesondere von relativ zu den Wicklungen bewegbaren Permanentmagneten und/oder anderen bestromten Wicklungen ein elektrischer Strom induziert werden, so dass sich eine elektromagnetische Koppelung zwischen dem Rotor und dem Stator einstellen kann. Vorzugsweise kann eine zusätzliche mechanische Koppelung des Rotors mit dem Stator vorgesehen sein.

Insbesondere weist der Stator Permanentmagneten und der Rotor Wicklungen auf oder der Stator weist Wicklungen und der Rotor Permanentmagneten auf, wobei die Wicklungen über eine berührungslose oder berührungsbehaftete elektrische Kontaktierung, insbesondere Schleifkontaktverbindung, mit Elektroleitungen zum Einleiten und/oder Ausleiten von elektrischer Energie verbunden sind. Je nach Ausgestaltung und/oder Einsatzzweck können Permanentmagnete und Wicklungen vertauscht sein. Grundsätzlich ist es möglich sowohl für den Stator als auch für den Rotor stromdurchfließbare, vorzugsweise individuell und unabhängig von einander regelbare Wicklungen vorzusehen, um besonders viele Regelungsmöglichkeiten für die elektrische Maschine erreichen zu können. Wenn entweder nur ein Stromkreis an den Wicklungen vorliegt, ist nur eine einzelne elektrische Kontaktierung beispielsweise über die Schleifkontaktverbindung erforderlich, wodurch entsprechend weniger Bauraum erforderlich ist. Besonders bevorzugt ist eine berührungslose elektrische Kontaktierung vorgesehen, um ohne mechanisches Schleifen elektrische Energie zwischen den Elektroleitungen und dem Rotor und/oder Stator auszutauschen. Durch die elektrische Kontaktierung kann eine Versorgungsspannung angelegt werden, um die elektrische Maschine zu betreiben und/oder das elektromagnetische Feld der elektrischen Maschine zu beeinflussen. Die Bestromung der elektrischen Maschine kann hierbei über eine zwischengeschaltete Elektronikschaltung erfolgen, die einerseits mit den Elektroleitungen und andererseits mit der mindestens einen Wicklung verbunden sein kann. Die Elektronikschaltung kann beispielsweise die Versorgungsspannung zerhacken, modulieren, insbesondere als Pulswellenmodulation, und die mindestens eine Wicklung der elektrischen Maschine bestromen, wobei vorzugsweise die Bestromung der mindestens einen Wicklung mit Hilfe der Elektronikschaltung gesteuert und/oder geregelt werden kann.

Vorzugsweise sind die Wicklungen mit einem Träger verbunden, wobei der Träger über ein in radialer Richtung verlaufendes Verbindungsstück mit der Abtriebswelle oder der Riemenscheibe verbunden ist, wobei der Träger zu an der von den Wicklungen wegweisenden Seite ein Kontaktelement zur Übertragung elektrischer Energie, insbesondere einen Schleifring der Schleifkontaktverbindung, aufweist. Ferner ist es möglich die Abtriebswelle als Antrieb und die Riemenscheibe als Abtrieb zu verwenden, so dass der Träger und damit die Wicklungen mit einer Antriebswelle oder einer Abtriebsscheibe verbunden sein können. Die elektrische Kontaktierung der Wicklungen mit dem Kontaktelement kann durch das Material des Trägers hindurch erfolgen. Beispielsweise kann das Kontaktelement, insbesondere der Schleifring, mit dem Träger vernietet sein, wobei ein durch das Material des Trägers hindurch verlaufender Niet eine elektrische Kontaktierung ausbilden und/oder ermöglichen kann. Durch den in radialer Richtung verlaufenden Anteil des Trägers mit Hilfe des Verbindungsstücks kann der das Kontaktelement beziehungsweise den Schleifring tragende Teil des mit der Abtriebswelle beziehungsweise mit der Riemenscheibe verbundenen Trägers zu der Abtriebswelle beziehungsweise zu der Riemenscheibe beabstandet positioniert sein. Dadurch kann zwischen dem Kontaktelement und der Abtriebswelle beziehungsweise der Riemenscheibe eine Aufnahmetasche ausgebildet werden, in der beispielsweise federbelastete Schleifbürsten angeordnet werden können. Die Schleifbürsten oder sonstige Kontaktierungselemente können insbesondere mit einem feststehenden Halter verbunden sein, der an einer axialen Seite der Riemenscheibenanordnung in die von dem Träger begrenzte Tasche eingesetzt werden kann. Der Halter kann insbesondere mit einem Aggregatgehäuse des Nebenaggregats verbunden sein, wobei vorzugsweise das Aggregatgehäuse des Nebenaggregats axial in die Riemenscheibe und/oder die Riemenscheibenanordnung hineinragen kann.

Besonders bevorzugt weist die Riemenscheibe eine nach radial außen weisende Lauffläche zur Anbindung des Zugmittels auf, wobei radial innerhalb der Lauffläche im Wesentlichen auf axialer Höhe der Lauffläche eine Elektronikschaltung zum Betrieb der elektrischen Maschine angeordnet ist. Über die Ausgestaltung der Riemenscheibe zur Koppelung mit dem Zugmittel ergibt sich innerhalb der Lauffläche der Riemenscheibe ein Hohlraum, der von der Elektronikschaltung genutzt werden kann. Von radial außen betrachtet kann die Elektronikschaltung im Wesentlichen vollständig von der Lauffläche abgedeckt sein. Die Elektronikschaltung kann dadurch insbesondere drehfest mit Wicklungen der elektrischen Maschine verbunden sein, für welche die Elektronikschaltung die Zufuhr und/oder Abfuhr elektrischer Energie steuert. Dadurch ist es nicht erforderlich für den Betrieb der elektrischen Maschine außerhalb der Riemenscheibenanordnung eine gesonderte Schaltungselektronik vorzusehen, die über Schleifkontakte oder andere Formen der Anbindung mit der elektrischen Maschine verbunden werden muss. Dadurch ergibt sich ein bauraumsparender Aufbau für die Riemenscheibenanordnung.

Insbesondere weist die Riemenscheibe eine nach radial außen weisende Lauffläche zur Anbindung des Zugmittels auf, wobei radial innerhalb der Lauffläche im Wesentlichen auf axialer Höhe der Lauffläche der Rotor und der Stator der elektrischen Maschine angeordnet sind. Über die Ausgestaltung der Riemenscheibe zur Koppelung mit dem Zugmittel ergibt sich innerhalb der Lauffläche der Riemenscheibe ein Hohlraum, der von der elektrischen Maschine genutzt werden kann. Von radial außen betrachtet kann die elektrische Maschine im Wesentlichen vollständig von der Lauffläche abgedeckt sein. Dadurch ergibt sich ein bauraumsparender Aufbau für die Riemenscheibenanordnung.

Die Erfindung betrifft ferner eine Verwendung einer Riemenscheibenanordnung, die wie vorstehend beschrieben aus- und weitergebildet sein kann, in einem Riementrieb eines Kraftfahrzeugs zum Zwecke der Ausleitung eines Teils eines von einem Kraftfahrzeugmotor zum Antrieb des Kraftfahrzeugs bereitgestellten Drehmoments an ein Nebenaggregat. Durch den von der elektrischen Maschine beeinflussbaren Leistungsfluss zwischen der Riemenscheibe und der Abtriebswelle ist es nicht erforderlich das über die Abtriebswelle angebundene Nebenaggregat für den ungünstigsten Betriebspunkt auszulegen, so dass durch die Verwendung der Riemenscheibenanordnung zur Ausleitung des bereitgestellten Drehmoments das Nebenaggregat kleiner dimensioniert sein kann und eine Reduzierung des Bauraums für Kraftfahrzeugkomponenten, insbesondere des Bauraums von über den Riementrieb antreibbaren Nebenaggregaten eines Kraftfahrzeugs, ermöglicht ist.

Die Erfindung betrifft ferner einen Riementrieb zum Antrieb von Nebenaggregaten eines Kraftfahrzeugs mit einer mit einer Motorwelle, insbesondere Kurbelwelle, eines Kraftfahrzeugmotors verbindbaren Eingangsriemenscheibe, mindestens einer über ein gemeinsames Zugmittel mit der Eingangsriemenscheibe gekoppelten Ausgangsriemenscheibe zum Antrieb des zugeordneten Nebenaggregats, insbesondere Kühlwasserpumpe, wobei mindestens eine Ausgangsriemenscheibe als Riemenscheibenanordnung ausgestaltet ist, die wie vorstehend beschrieben aus- und weitergebildet sein kann. Vorzugsweise sind mehrere Ausgangsriemenscheiben vorgesehen, wobei insbesondere mehrere, vorzugsweise alle, Ausgangsriemenscheiben als Riemenscheibenanordnung ausgestaltet sind, die wie vorstehend beschrieben aus- und weitergebildet sein kann. Durch den von der elektrischen Maschine beeinflussbaren Leistungsfluss zwischen der Riemenscheibe und der Abtriebswelle ist es nicht erforderlich das über die Abtriebswelle angebundene Nebenaggregat für den ungünstigsten Betriebspunkt auszulegen, so dass durch den Riementrieb das Nebenaggregat kleiner dimensioniert sein kann und eine Reduzierung des Bauraums für Kraftfahrzeugkomponenten, insbesondere des Bauraums von über den Riementrieb antreibbaren Nebenaggregaten eines Kraftfahrzeugs, ermöglicht ist.

Die Erfindung betrifft ferner ein Verfahren zum Antrieb eines über eine Riemenscheibenanordnung, die wie vorstehend beschrieben aus- und weitergebildet sein kann, angebundenen Nebenaggregats eines Kraftfahrzeugs, bei dem die Zufuhr von elektrischer Energie in die elektrische Maschine und/oder die Abfuhr von elektrischer Energie von der elektrischen Maschine in Abhängigkeit von einer Drehzahl der Riemenscheibe zur Regelung einer Nenndrehzahl der Abtriebswelle durchgeführt wird. Durch den von der elektrischen Maschine beeinflussbaren Leistungsfluss zwischen der Riemenscheibe und der Abtriebswelle ist es nicht erforderlich das über die Abtriebswelle angebundene Nebenaggregat für den ungünstigsten Betriebspunkt auszulegen, so dass das Nebenaggregat kleiner dimensioniert sein kann und eine Reduzierung des Bauraums für Kraftfahrzeugkomponenten, insbesondere des Bauraums von über den Riementrieb antreibbaren Nebenaggregaten eines Kraftfahrzeugs, ermöglicht ist. Stattdessen ist es möglich das Nebenaggregat für einen beabsichtigten Nenndrehzahlbereich auszulegen und durch die Beeinflussung des Leistungsflusses zwischen der Riemenscheibe und der Abtriebswelle den beabsichtigten Nenndrehzahlbereich für das jeweilige Nebenaggregat zu regeln. Das Verfahren kann insbesondere wie vorstehend anhand der Riemenscheibenanordnung erläutert aus- und weitergebildet sein.

### Zeichnungen

Nachfolgend wird die Erfindung unter Bezugnahme auf die anliegenden Zeichnungen exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht einer Riemenscheibenanordnung,
Fig. 2: eine schematische Prinzipdarstellung der Riemenscheibenanordnung aus Fig. 1 in einem Überholbetrieb,
Fig. 3: eine schematische Prinzipdarstellung der Riemenscheibenanordnung aus Fig. 1 in einem Fail-Safe-Betrieb und
Fig. 4: eine schematische Prinzipdarstellung der Riemenscheibenanordnung aus Fig. 1 in einem Bremsbetrieb.

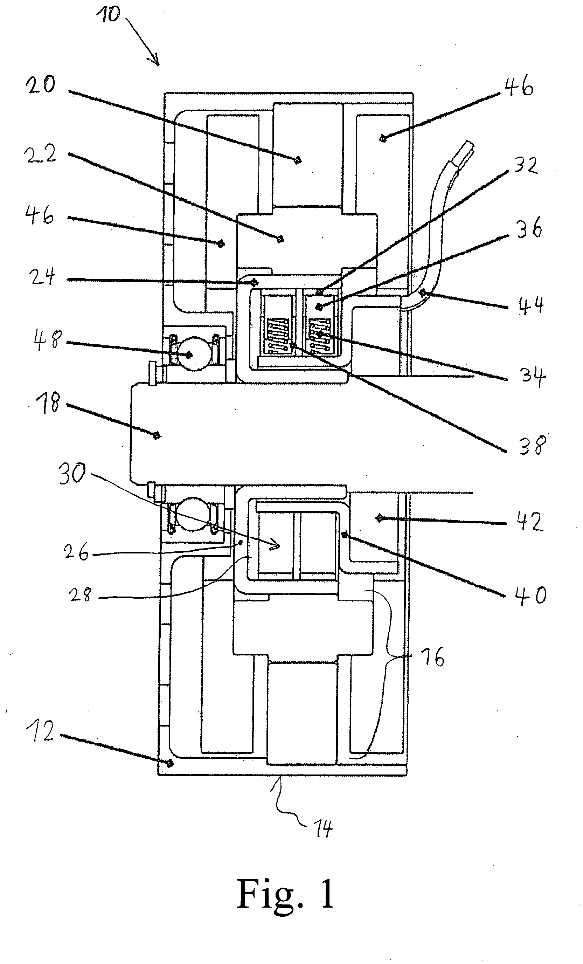

Die in Fig. 1 dargestellte Riemenscheibenanordnung 10 weist eine Riemenscheibe 12 mit einer nach radial außen weisenden Lauffläche 14 auf, über die ein von einer Kurbelwelle einer Brennkraftmaschine eines Kraftfahrzeugs bereitgestelltes Drehmoment von einem Zugmittel, beispielsweise Flachriemen, eingeleitet werden kann. Die Riemenscheibe 12 ist über eine elektrische Maschine 16 mit einer Abtriebswelle 18 gekoppelt, die eine Eingangswelle eines Nebenaggregats, beispielsweise eine Kühlwasserpumpe, sein kann. Die elektrische Maschine 16 weist einen mit der Riemenscheibe 12 fest verbundenen Rotor 20 und einen über einen Luftspalt zu dem Rotor 20 beabstandeten Stator 22 auf. Im dargestellten Ausführungsbeispiel weist der Rotor 20 Permanentmagneten auf, während der Stator 22 Wicklungen aufweist. Ferner ist der Stator 22 über einen Träger 24 fest mit der Abtriebswelle 18 verbunden. Der Träger 24 ist ringförmig mit einem im Wesentlichen U-förmigen axial geöffneten Querschnitt ausgestaltet. Der Träger 24 weist an der Basis des U-förmigen Querschnitts ein in radialer Richtung verlaufendes Verbindungsstück 26 auf, so dass sich zwischen dem Stator 22 und der Abtriebswelle 18 eine Tasche 28 ausbildet, in der eine Schleifkontaktverbindung 30 vorgesehen ist. Die Schleifkontaktverbindung 30 weist an der von dem Stator 22 wegweisenden Seite Schleifringe 32 auf, gegen die mit Druckfedern 34 federbelastete Schleifbürsten 36 drücken, um einen elektrischen Kontakt herzustellen. Die Druckfeder 34 und die mit der Druckfeder 34 verbundene Schleifbürste 36 sind in einer Schleifbürstenführung 38 geführt. Die Schleifbürstenführung 38 ist mit einem feststehenden Halter 40 verbunden. Der Halter 40 kann insbesondere mit einem Aggregatgehäuse 42 des Nebenaggregats verbunden sein, wobei das Aggregatgehäuse 42 vorzugsweise zumindest teilweise in die Riemenscheibe 12 und/oder die Riemenscheibenanordnung 10 axial hineinragen kann. Über den Halter 40 und/oder das Aggregatgehäuse 42 können Elektroleitungen 44 geführt sein, die mit den Schleifbürsten 36 elektrisch verbunden sein können. Mit Hilfe einer vollständig innerhalb der Riemenscheibe 12 angeordneten Elektronikschaltung 46, die insbesondere mit dem Träger 24 oder mit dem Halter 40 oder in einer mehrteiligen Ausgestaltung mit einem ersten Teil mit dem Träger 24 und mit einem zweiten Teil mit dem Halter 40 befestigt ist, kann eine Zufuhr und/oder Abfuhr von elektrischer Energie über die Elektroleitungen 44 gesteuert werden, wodurch sich das elektromagnetische Feld zwischen dem Rotor 20 und dem Stator 22 beeinflussen lässt. Dadurch ist es insbesondere möglich, dass die Drehzahl der Abtriebswelle 18 von der Drehzahl der Riemenscheibe 12 abweicht, insbesondere um für die Abtriebswelle 18 im Wesentlichen unabhängig von der Drehzahl der Riemenscheibe 12 eine beabsichtigte Nenndrehzahl zu regeln. Hierzu ist die Riemenscheibe 12 nicht fest mit der Abtriebswelle 18 verbunden, sondern über ein Wälzlager 48 relativ drehbar gelagert.

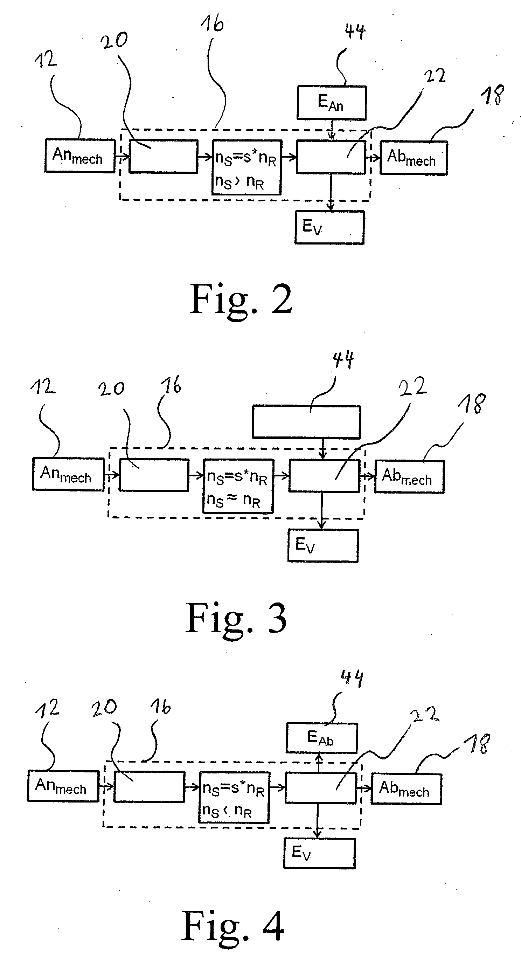

Wenn wie in Fig. 2 dargestellt in die elektrische Maschine 16 über die Elektroleitungen 44 elektrische Energie E_{An} zugeführt wird, kann die Abtriebswelle 18 zusätzlich zu der über die Riemenscheibe 12 eingeleiteten mechanischen Energie An_{mech} beschleunigt werden, so dass der Stator 22 der Abtriebswelle 18 mit einer Drehzahl n_{S} rotieren kann, die um einen Faktor s größer als die Drehzahl n_{R} des Rotors 20 der Riemenscheibe 12 ist ("Überholbetrieb"). Ein geringer Teil der zugeführten Energien geht als Verlustenergie E_{V} verloren und wird nicht an die Abtriebswelle 18 übertragen, wodurch die von der Abtriebswelle 18 abgegebene mechanische Energie Ab_{mech} etwas geringer ausfällt.

Wenn wie in Fig. 3 dargestellt weder über die Elektroleitungen 44 elektrische Energie zugeführt oder abgeführt wird, kann insbesondere die Elektronikschaltung 46 die Wicklungen des Stators 22 kurzschließen, so dass die Abtriebswelle 18 mit einer Drehzahl n_{S} rotieren kann, die im Wesentlichen nahezu der Drehzahl n_{R} des Rotors 20 entspricht ("Fail-Safe-Betrieb"). Ein geringer Teil der zugeführten Energien geht als Verlustenergie E_{V} verloren und wird nicht an die Abtriebswelle 18 übertragen, so dass die Drehzahl n_{S} der Abtriebswelle 18 unter Berücksichtigung der Verlustenergie E_{V} geringfügig kleiner als die Drehzahl n_{R} des Rotors 20 ist, wodurch die von der Abtriebswelle 18 abgegebene mechanische Energie Ab_{mech} etwas geringer ausfällt. Die Verlustenergie E_{V} ist jedoch üblicherweise so gering, dass der Faktor s in guter Näherung 1 beträgt.

Wenn wie in Fig. 4 dargestellt aus der elektrischen Maschine 16 über die Elektroleitungen 44 elektrische Energie E_{Ab} abgeführt wird, beispielsweise um einen weiteren elektrischen Verbraucher zu betreiben und/oder erzeugte elektrische Energie zu speichern, kann die Abtriebswelle 18 im Vergleich zu der über die Riemenscheibe 12 eingeleitete mechanische Energie An_{mech} gebremst werden, so dass die Abtriebswelle 18 mit einer Drehzahl n_{S} rotieren kann, die um einen Faktor s kleiner als die Drehzahl n_{R} des Rotors 20 ist ("Bremsbetrieb"). Ein geringer Teil der von der Riemenscheibe 12 zugeführten Energie geht als Verlustenergie E_{V} verloren und wird nicht über die elektrische Maschine 16 an die Abtriebswelle 18 übertragen, wodurch die von der elektrischen Maschine 16 an die Energiesenke abgebbare elektrische Energie E_{Ab} und von der Abtriebswelle 18 abgegebene mechanische Energie Ab_{mech} etwas geringer ausfällt.

### Bezugszeichen liste

- 10: Riemenscheibenanordnung
- 12: Riemenscheibe
- 14: Lauffläche
- 16: elektrische Maschine
- 18: Abtriebswelle
- 20: Rotor
- 22: Stator
- 24: Träger
- 26: Verbindungsstück
- 28: Tasche
- 30: Schleifkontaktverbindung
- 32: Schleifring
- 34: Druckfeder
- 36: Schleifbürste
- 38: Schleifbürstenführung
- 40: Halter
- 42: Aggregatgehäuse
- 44: Elektroleitung
- 46: Elektronikschaltung
- 48: Wälzlager

- An_{mech}: zugeführte mechanische Energie
- Ab_{mech}: abgeführte mechanische Energie
- E_{An}: zugeführte elektrische Energie
- E_{Ab}: abgeführte elektrische Energie
- E_{V}: Verlustenergie
- n_{R}: Drehzahl des Rotors
- n_{S}: Drehzahl des Stators

## Patentansprüche

1. Riemenscheibenanordnung für einen Riementrieb zum Antrieb von Nebenaggregaten, insbesondere Klimakompressor, Lichtmaschine, Ölpumpe, Schmierstoffpumpe, Kraftstoffpumpe, eines Kraftfahrzeugs, mit
- einer Riemenscheibe (12) zum Einleiten eines über ein Zugmittel bereitstellbaren Drehmoments,
- einer Abtriebswelle (18) zum Antrieb eines Nebenaggregats, insbesondere Kühlwasserpumpe, und
- einer elektrischen Maschine (16) zur Drehmomentübertragung zwischen der Riemenscheibe (12) und der Abtriebswelle (18), wobei die elektrische Maschine (16) einen mit der Riemenscheibe (12) verbundenen Rotor (20) und einen mit der Abtriebswelle (18) verbundenen Stator (22) aufweist, **dadurch gekennzeichnet, dass** ein Schaltelement zur Herstellung einer im Wesentlichen drehfesten Koppelung der Riemenscheibe (12) mit der Abtriebswelle (18) im Falle eines wegfallenden Stromflusses bei der elektrischen Maschine (16) vorgesehen ist.

2. Riemenscheibenanordnung nach Anspruch 1, **dadurch gekennzeichnet, dass** die elektrische Maschine (16) mit einer elektrischen Energiequelle zum Beschleunigen der Abtriebswelle (18) und/oder mit einer elektrischen Energiesenke zum Abbremsen der Abtriebswelle (18) verbunden ist.

3. Riemenscheibenanordnung nach Anspruch 1 oder 2, **dadurch gekennzeichnet, dass** die elektrische Maschine (16) Wicklungen aufweist, wobei die Wicklungen im Falle eines wegfallenden Stromflusses bei der elektrischen Maschine (16) kurzschließbar ist.

4. Riemenscheibenanordnung nach einem der Ansprüche 1 bis 3, **dadurch gekennzeichnet, dass** der Stator (22) Permanentmagneten und der Rotor (20) Wicklungen aufweist oder der Stator (22) Wicklungen und der Rotor (20) Permanentmagneten aufweist, wobei die Wicklungen über eine berührungslose oder berührungsbehaftete elektrische Kontaktierung, insbesondere Schleifkontaktverbindung (30), mit Elektroleitungen (44) zum Einleiten und/oder Ausleiten von elektrischer Energie verbunden sind.

5. Riemenscheibenanordnung nach Anspruch 4, **dadurch gekennzeichnet, dass** die Wicklungen mit einem Träger (24) verbunden sind, wobei der Träger (24) über ein in radialer Richtung verlaufendes Verbindungsstück (26) mit der Abtriebswelle (18) oder der Riemenscheibe (12) verbunden ist, wobei der Träger (24) zu an der von den Wicklungen wegweisenden Seite ein Kontaktelement zur Übertragung elektrischer Energie, insbesondere einen Schleifring (32) der Schleifkontaktverbindung (30), aufweist.

6. Riemenscheibenanordnung nach einem der Ansprüche 1 bis 5, **dadurch gekennzeichnet, dass** die Riemenscheibe (12) eine nach radial außen weisende Lauffläche (14) zur Anbindung des Zugmittels aufweist, wobei radial innerhalb der Lauffläche (14) im Wesentlichen auf axialer Höhe der Lauffläche (14) eine Elektronikschaltung (46) zum Betrieb der elektrischen Maschine (16) angeordnet ist.

7. Riemenscheibenanordnung nach einem der Ansprüche 1 bis 6, **dadurch gekennzeichnet, dass** die Riemenscheibe (12) eine nach radial außen weisende Lauffläche (14) zur Anbindung des Zugmittels aufweist, wobei radial innerhalb der Lauffläche (14) im Wesentlichen auf axialer Höhe der Lauffläche (14) der Rotor (20) und der Stator (22) der elektrischen Maschine (16) angeordnet sind.

8. Riementrieb zum Antrieb von Nebenaggregaten eines Kraftfahrzeugs mit einer mit einer Motorwelle, insbesondere Kurbelwelle, eines Kraftfahrzeugmotors verbindbaren Eingangsriemenscheibe, mindestens einer über ein gemeinsames Zugmittel mit der Eingangsriemenscheibe gekoppelten Ausgangsriemenscheibe zum Antrieb des zugeordneten Nebenaggregats, insbesondere Kühlwasserpumpe, wobei mindestens eine Ausgangsriemenscheibe als Riemenscheibenanordnung (10) nach einem der Ansprüche 1 bis 7 ausgestaltet ist.

9. Verfahren zum Antrieb eines über eine Riemenscheibenanordnung (10) nach einem der Ansprüche 1 bis 7 angebundenen Nebenaggregats eines Kraftfahrzeugs, bei dem die Zufuhr von elektrischer Energie in die elektrische Maschine (16) und/oder die Abfuhr von elektrischer Energie von der elektrischen Maschine (16) in Abhängigkeit von einer Drehzahl der Riemenscheibe (12) zur Regelung einer Nenndrehzahl der Abtriebswelle (18) durchgeführt wird.

## Claims

1. Belt pulley arrangement for a belt drive for driving auxiliary units of a motor vehicle, in particular an air-conditioning compressor, a generator, an oil pump, a lubricant pump and/or a fuel pump, said arrangement having
- a belt pulley (12) for introducing a torque that can be provided via a flexible drive means,
- an output shaft (18) for driving an auxiliary unit, in particular a cooling water pump, and
- an electric machine (16) for torque transmission between the belt pulley (12) and the output shaft (18), wherein the electric machine (16) has a rotor (20) connected to the belt pulley (12) and a stator (22) connected to the output shaft (18),
**characterized in that** a switching element is provided for producing coupling of the belt pulley (12) to the output shaft (18) in a manner substantially fixed against relative rotation in the case of a loss of the power flow in the electric machine (16).

2. Belt pulley arrangement according to Claim 1, **characterized in that** the electric machine (16) is connected to an electrical energy source for accelerating the output shaft (18) and/or to an electrical energy sink for braking the output shaft (18).

3. Belt pulley arrangement according to Claim 1 or 2, **characterized in that** the electric machine (16) has windings, wherein the windings can be shortcircuited in the case of a loss of the power flow in the electric machine (16).

4. Belt pulley arrangement according to one of Claims 1 to 3, **characterized in that** the stator (22) has permanent magnets and the rotor (20) has windings, or the stator (22) has windings and the rotor (20) has permanent magnets, wherein the windings are connected via a contactless or contacting electrical contact means, in particular a sliding contact connection (30), to electric leads (44) for introducing and/or withdrawing electrical energy.

5. Belt pulley arrangement according to Claim 4, **characterized in that** the windings are connected to a support (24), wherein the support (24) is connected to the output shaft (18) or the belt pulley (12) by means of a connecting piece (26) extending in a radial direction, wherein, on the side facing away from the windings, the support (24) has a contact element for transmitting electrical energy, in particular a slip ring (32) of the sliding contact connection (30).

6. Belt pulley arrangement according to one of Claims 1 to 5, **characterized in that** the belt pulley (12) has a radially outward-facing running surface (14) for connection of the flexible drive means, wherein an electronic circuit (46) for operating the electric machine (16) is arranged radially to the inside of the running surface (14), substantially at the axial level of the running surface (14).

7. Belt pulley arrangement according to one of Claims 1 to 6, **characterized in that** the belt pulley (12) has a radially outward-facing running surface (14) for connection of the flexible drive means, wherein the rotor (20) and the stator (22) of the electric machine are arranged radially to the inside of the running surface (14), substantially at the axial level of the running surface (14).

8. Belt drive for driving auxiliary units of a motor vehicle, having an input belt pulley, which can be connected to an engine shaft, in particular a crankshaft, of an internal combustion engine, at least one output belt pulley, which is coupled to the input belt pulley by means of a common flexible drive means and is used to drive the associated auxiliary unit, in particular a cooling water pump, wherein at least one output belt pulley is designed as a belt pulley arrangement (10) according to one of Claims 1 to 7.

9. Method for driving an auxiliary unit of a motor vehicle which is connected by means of a belt pulley arrangement (10) according to one of Claims 1 to 7, in which method the supply of electrical energy to the electric machine (16) and/or the withdrawal of electrical energy from the electric machine (16) is carried out in accordance with a speed of the belt pulley (12) in order to regulate a rated speed of the output shaft (18).

## Revendications

1. Système de poulie destiné à une transmission par courroie servant à entraîner des unités auxiliaires, notamment un compresseur de climatisation, un alternateur, une pompe à huile, une pompe à lubrifiant, une pompe à carburant, d'un véhicule automobile, comportant
- une poulie (12) destinée à introduire un couple de rotation qui peut être appliqué à un moyen de traction,
- un arbre de sortie (18) destiné à entraîner une unité auxiliaire, notamment une pompe à eau de refroidissement, et
- une machine électrique (16) destinée à transmettre le couple de rotation entre la poulie (12) et l'arbre de sortie (18), dans lequel la machine électrique (16) comporte un rotor (20) relié à la poulie (12) et un stator (22) relié à l'arbre de sortie (18),
**caractérisé en ce qu'**il est prévu un élément de commutation destiné à réaliser un accouplement sensiblement solidaire en rotation de la poulie (12) à l'arbre de sortie (18) en cas de suppression du flux de courant dans la machine électrique (16).

2. Système de poulie selon la revendication 1, **caractérisé en ce que** la machine électrique (16) est reliée à une source d'énergie électrique destinée à accélérer l'arbre de sortie (18) et/ou à un dissipateur d'énergie électrique destiné à freiner l'arbre de sortie (18).

3. Système de poulie selon la revendication 1 ou 2, **caractérisé en ce que** la machine électrique (16) comporte des enroulements, dans lequel les enroulements peuvent être court-circuités dans le cas d'une suppression du flux de courant dans la machine électrique (16).

4. Système de poulie selon l'une quelconque des revendications 1 à 3, **caractérisé en ce que** le stator (22) comporte des aimants permanents et le rotor (20) comporte des enroulements ou **en ce que** le stator (22) comporte des enroulements et le rotor (20) comporte des aimants permanents, dans lequel les enroulements sont connectés par l'intermédiaire d'un dispositif de contact électrique sans contact ou avec contact, notamment une liaison de contact à frottement (30), à des lignes électriques (44) pour l'application et/ou l'extraction d'énergie électrique.

5. Système de poulie selon la revendication 4, **caractérisé en ce que** les enroulements sont reliés à un support (24), dans lequel le support (24) est relié par l'intermédiaire d'une pièce de liaison (26) s'étendant en direction radiale à l'arbre de sortie (18) ou à la poulie (12), dans lequel le support (24) présente sur la face tournée à l'opposé des enroulements, un élément de contact destiné à transmettre de l'énergie électrique, notamment une bague de frottement (32) de la liaison de contact à frottement (30).

6. Système de poulie selon l'une quelconque des revendications 1 à 5, **caractérisé en ce que** la poulie (12) présente une surface de roulement (14) tournée radialement vers l'extérieur destinée à l'accouplement du moyen de traction, dans lequel, radialement à l'intérieur de la surface de roulement (14) et sensiblement sur la hauteur axiale de la surface de roulement (14), est disposé un circuit électronique (46) destiné à commander la machine électrique (16).

7. Système de poulie selon l'une quelconque des revendications 1 à 6, **caractérisé en ce que** la poulie (12) présente une surface de roulement (14) tournée radialement vers l'extérieur pour l'accouplement du moyen de traction, dans lequel, radialement à l'intérieur de la surface de roulement (14) et sensiblement sur la hauteur axiale de la surface de roulement (14), sont disposés le rotor (20) et le stator (22) de la machine électrique (16).

8. Poulie destinée à entraîner des unités auxiliaires d'un véhicule automobile comportant une poulie d'entrée pouvant être reliée à un arbre moteur, notamment à un vilebrequin, d'un moteur de véhicule automobile, au moins une poulie de sortie accouplée par l'intermédiaire d'un moyen de traction commun à la poulie d'entrée pour entraîner l'unité auxiliaire associée, notamment une pompe à eau de refroidissement, dans lequel au moins une poulie de sortie est réalisée sous la forme d'un système de poulie (10) selon l'une quelconque des revendications 1 à 7.

9. Procédé destiné à entraîner une unité auxiliaire reliée par l'intermédiaire d'un système de poulie (10) selon l'une quelconque des revendications 1 à 7, d'un véhicule automobile, dans lequel l'application d'énergie électrique à la machine électrique (16) et/ou l'extraction d'énergie électrique de la machine électrique (16) est/sont effectué(s) en fonction d'une vitesse de rotation de la poulie (12) pour réguler une vitesse de rotation nominale de l'arbre de sortie (18).
